# EUROPÄISCHE PATENTSCHRIFT

(11) **EP 1 718 403 B1**
(45) Veröffentlichungstag und Bekanntmachung des Hinweises auf die Patenterteilung: **04.05.2011**
(21) Anmeldenummer: 05714979.1
(22) Anmeldetag: 16.02.2005
(51) Int. Cl.: B01F 5/06, B01F 13/10, B01F 13/00, B01F 3/04, B67D 1/00, A23L 2/54

(54) **VERFAHREN UND VORRICHTUNG ZUR BEGASUNG VON FLÜSSIGKEITEN**
METHOD AND DEVICE FOR GASIFYING LIQUIDS
PROCEDE ET DISPOSITIF DE GAZEIFICATION DES LIQUIDES

(30) Priorität: 16.02.2004 DE 102004007727
(43) Veröffentlichungstag der Anmeldung: 08.11.2006
(73) Patentinhaber: Spiegel, Margret, 21509 Glinde (DE)
(72) Erfinder: SPIEGEL, Pasquale, 21509 Glinde (DE)
(74) Vertreter: Heldt, Gert
(86) Internationale Anmeldenummer: PCT/DE2005/000261
(87) Internationale Veröffentlichungsnummer: WO 2005/077507

(56) Entgegenhaltungen:
- EP-A- 0 595 177
- EP-B- 1 276 697
- WO-A-00/25904
- WO-A-94/11097
- WO-A-03/037492
- DE-A1- 2 226 307
- GB-A- 191 216 420
- US-A1- 2003 168 754

## Beschreibung

Die Erfindung betrifft ein Verfahren zur Herstellung von begaster Flüssigkeit, bei dem in einem ersten Begaser ein Gemisch von Flüssigkeit und Gas erzeugt wird, und in dem Gemisch die Bindung des Gases an die Flüssigkeit in einem dem ersten Begaser nachgeschalteten zweiten Bgaser intensiviert wird.

Darüber hinaus betrifft die Erfindung eine Vorrichtung zur Herstellung von begaster Flüssigkeit mit mindestens einem ersten Begaser, in dessen Gefäß ein Gemisch aus Flüssigkeit und Gas hergestellt wird, und einem dem ersten Begaser nachgeschalteten zweiten Begaser.

Insbesondere auf dem Gebiet der von Tafelwasser oder anderen Sprudelwässern sind Verfahren und Vorrichtungen zur Begasung von Flüssigkeit, insbesondere zur Einleitung von CO₂ in Waser bekannt. Dabei wird Wasser und CO₂ in ein Karbonatorgefäß eingefüllt. Mit Hilte verschiedener Verfahrensschritte, insbesondere einer Vernebelunq des Wassers werden innerhalb des Karbonatorgefäßes Verhältnisse hergestellt, die die Mischung des CO₂ mit dem Wasser begünstigen sollen.

Das dabei entstehende Sprudelwasser bzw, andere mit CO₂ vermischte Getränke können jedoch in vielerlei Beziehung nicht befriedigen, Einerseits vermischt sich das Gas mit dem Wasser nur unzulänglich, so dass nach einem Einfüllen des Gas-Wassergemisch in ein Trinkgefäß sehr häufig das CO₂ aus dem Gas-Wassergemisches relativ schnell wieder austritt, so das bei einer entsprechend langsamen Trinkwese große Teile des abgezapften Gas-Wassergemisches kein Gas mehr enthält. Zum anderen ist das Gas innerhalb des Gas-Wassergemisches auch in vergleichsweise wenigen aber sehr großen Gasblasen verteilt, die ein beim Trinken erwünschtes prickelndes Gefühl nicht aufkommen lassen. Schließlich ist insbesondere beim Zapfen von Softdrinks, die mit Geschmacksstoffen versetzt sind, ein starkes Aufschäumen zu beobachten, was dazu führt, dass entweder ein wesentlicher Teil des Getränkes über den Rand des Trinkgefäßes fließt oder die Zapfgeschwindigkeit stark reduziert werden muß, um ein entsprechendes Aufschäumen zu verhindern. Dabei ist generell davon auszugehen, dass alle Getränke, die im Postmixbereich gezapft werden, eine starke Schaumbildunng beim Zapfen zeigen. Diese wird noch verstärkt, wenn eine Zapfanlage sehr hohe Zapfkapazitäten erfüllen muß. In solchen Fällen bricht häufig auch das vorgeschaltete oder nachgeschaltete Kühlsystem zusammen, so dass die zu zapfenden Getränke um einige Temperaturgrade ansteigen. Durch diesen Temperaturantieg wird die Schaumbildung beim Zapfen noch erheblich begünstigt, so dass das Zapfen zeitweise unterbrochen werden muß, bis die Temperatur des zu zapfenden Gemisches sich wieder gesenkt hat. Dabei hat sich eine Zapfmethode als praktikabel erwiesen, bei der z. B. Stillwasserweichen eingebaut werden, um karbonisierte Flüssigkeiten mit Stillwasser zu verdünnen. Auf diese Weise soll eine Möglichkeit geschaffen werden, das Schäumen soweit zu unterdrücken, dass das Getränk wieder gezapft werden kann.

Ein ähnliches Problem besitzen Karbonatorsysteme oder Imprägniersysteme, wenn sie aufgrund ihres Alters Verschleißerscheinungen aufweisen. Solche älteren Anlagen müssen in der Regel mehrmals während einer Woche kalibriert werden. Dadurch entstehen hohe Kosten aufgrund der aufzuwendenden Zeit und des dazu notwendigen Personals.

Aus der internationalen Patentanmeldung WO 03/037492 A1 ist ein Karbonisierungssystem bekanntgeworden, bei dem karbonisiertes Wasser dadurch erzeugt wird, dass das Wasser zunächst einer Vorkarbonisierung und sodann nach einer Druckerhöhung in einer Pumpe (18) einer Endkarbonisierung zugeführt wird, bevor das entsprechend karbonisierte Getränk über Ventile gezapft werden kann.

Diese Aufteilung in eine Vorkarbonisierung und eine Endkarbonisierung dient dazu, die Zapfventile mit unterschiedlich stark karbonisierten Wassern zu verschen. So wird in der Vorkarbonisierung ein karbonisiertes Wasser erzeugt, das gegenüber üblichen karbonisierten Wässern einen relativ geringen Karbonisierungsgrad, beispielsweise von 2,5 Volumen% besitzt.

Dieses vorkarbonisierte Wasser wird einem Zapfhahn zugeleitet, aus dem das niedrig karbonisierte Wasser gezapft werden kann. Darüber hinaus werden die Zapfventile auch mit einem nichtkarbonisierten Trinkwasser versorgt. Schließlich wird das geringkarbonisierte Trinkwasser aus dem Vorkarbonator in den Endkarbonator eingeleitet, in dem das Trinkwasser die übliche Anreicherung mit CO₂ auf 5 Volumen % erfährt. Auf diese Weise ist es möglich, Trinkwasser mit verschiedenen CO₂ Anreicherungen zu erzeugen und zu Zapfen. Das dabei erzeugte karbonisierte Wasser besitzt jedoch dieselben Nachteile, die bereits geschildert wurden, nämlich ein schnelles Austreten des Gases aus dem gezapften Gas-Wassergemisch und ein starkes Aufschäumen des Gas-Wassergemiches bzw. eines mit Geschmackstoffen angereicherten Getränkes, so dass ein schnelles Zapfen dadurch verhindert wird.

Aufgabe der vorliegenden Erfindung ist es daher, ein Verfahren und eine Vorrichtung zum Zapfen von Wasser anzugeben, die weitgehend unabhängig von den Problemen der Schaumbildung und des Auftretens des Gases aus dem Gas-Flüssigkeitsgemisch sind. Diese Aufgabe wird durch das erfindungsgemäße Verfahren dadurch gelöst, dass das aus dem ersten Begaser austretende Gemisch unter Druck durch eine aus einem mit großer Oberfläche versehenen Schuttgut bestehenden Füllung des zweiten Begasers hindurchgepresst und dabei intensiv durchmischt und nach Verlassen des zweiten Begasers mindestens einer Zapfstelle zugeleitet wird.

Hinsichtlich der Vorrichtung wird die Aufgabe dadurch gelöst, dass der zweite Begaser eine Füllung aus einem Granulat großer Oberfläche aufweist, die von dem aus dem ersten Begaser austretenden Gemisch aus Wasser und Gas unter Druck durchströmt ist, und der zweite Begaser an seinem Ausgang mit einer Zapfstelle für das begaste Wasser über eine Ausgabeleitung verbunden ist.

Das Hindurchleiten des in dem ersten Begaser erzeugten Gas-Flüsskeitsgemisches durch das Granulat des zweiten Begasers führt dazu, dass das Gas-Flüssigkeitsgemisch den zweiten Begaser in einer vollkommen veränderten Zusammenstellung verlässt, das Gas in dem Wasser feinperlig verteilt und auf diese Weise fest an das Wasser gebunden wird. Es tritt daher nach dem Zapfen des Gas-Wassergemisches nicht so schnell aus diesem aus wie bei einer großvolumigen Verteilung der Gasblasen innerhalb des Gas-Wassergemisches. Auf diese Weise ist es möglich mit einem geringen Anteil von Gas eine hohe Verteilungsdichte des Gases innerhalb der Flüssigkeit zu erzeugen. Dadurch wird im Falle des Trinkwassers der Geschmack erheblich verbessert und die Standzeit, während der das Gas in der Flüssigkeit gelöst ist, verlängert. Schließlich wird auch aufgrund der festen Bindung des feinperlig verteilten Gases innerhalb der Flüssigkeit ein Aufschäumen beim Zapfen des Gas-Wassergemisches unterdrückt, so dass ein schnelles Zapfen des Gas-Wassergemisches ermöglicht wird.

Gemäß bevorzugten Ausführungsformen der Erfindung kann die Imprägnierung mit Kreislaufkarbonatoren oder mit Stoßkarbonatoren vorgenommen werden, bevor die in diesen Karbonatoren hergestellten Flüssigkeiten im Inlinebegaser nachträglich imprägniert werden. Dabei kann der Inlinebegaser bei Kreislaufkarbonatoren innerhalb der Kreislaufleitungen bzw. bei Stoßkarbonatoren in der mit den Zapfstellen verbundenen Zulaufleitung integriert sein.

Bei derartig umgerüsteten Imprägniersystemen oder Schankanlagen können sehr gute Zapfergebnisse unabhängig von gegebenenfalls auftretenden Schwankungen der Flüssigkeitstemperatur erzielt werden, ohne dass dadurch Qualitätsverluste in Kauf genommen werden müssen. Eine Schaumbildung ist nicht zu befürchten.

Ein weiterer Vorteil derartiger Inlinebegaser ist darin zu sehen, dass diese in der Lage sind, das gesamte Zapfsystem so zu gestalten, dass es von Störungen weitgehend unabhängig ist. Sollte sich dabei herausstellen, dass im Begasungsgefäß keine Imprägnierung der Flüssigkeit stattfindet, kann der Betrieb der gesamten Anlage kurzfristig umgestellt werden, so dass nur noch die Imprägnierung im Inlinebegaser stattfindet. Zu diesem Zwecke muß der Inlinebegaser unmittelbar an eine Gasversorgung angeschlossen werden. Ein derartiger Anschluß ist aufgrund des Aufbaues dieses Inlinebegasers ohne weiteres und schnell möglich. Dadurch kann der Betrieb der mit dem Begasungsgefäß arbeitenden Anlage weiterhin aufrechterhalten bleiben, sofern die mit dem Begasungsgefäß arbeitende Anlage mit einem Inlinebegaser ausgestattet ist. Eine derartige Ausweichmethode kann bereits bei einem Neubau von Imprägniersystemen vorgesehen werden, um der Gefahr vorzubeugen, dass eine derartige Anlage in Folge ihrer Störanfälligkeit vollkommen ausfällt. Durch die Versorgung des Inlinebegasers mit Flüssigkeit und Gas, bevorzugt auch mit gekühlter Flüssigkeit kann der Betrieb der Imprägnieranlage aufrechterhalten werden, insbesondere, wenn mindestens eine Flüssigkeitsdruckerhöhungspumpe vorhanden ist und eingesetzt werden kann. Eine derartige Imprägnieranlage ist in der Lage hohe Zapfgeschwindigkeiten auch im Postmixbereich einzuhalten.

Durch den störungsfreien Betrieb derartiger Anlagen ergibt sich ein wesentlicher Kostenvorteil für den Betreiber. Dieser kann bei regulärem Betrieb seiner Anlage die Geschwindigkeit beim Zapfen von Postmixgetränken aufgrund ausbleibender Schaumentwicklung erheblich steigern. Sollten Schwierigkeiten beim Betrieb des Begasungsgefäßes auftreten, so kann der Betrieb der gesamten Anlage auf den Inlinebegaser umgestellt werden, so dass nach kurzer Betriebsunterbrechung die gesamte Anlage wieder ihren Betrieb aufnehmen kann.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht werden.

In den Zeichnungen zeigen:

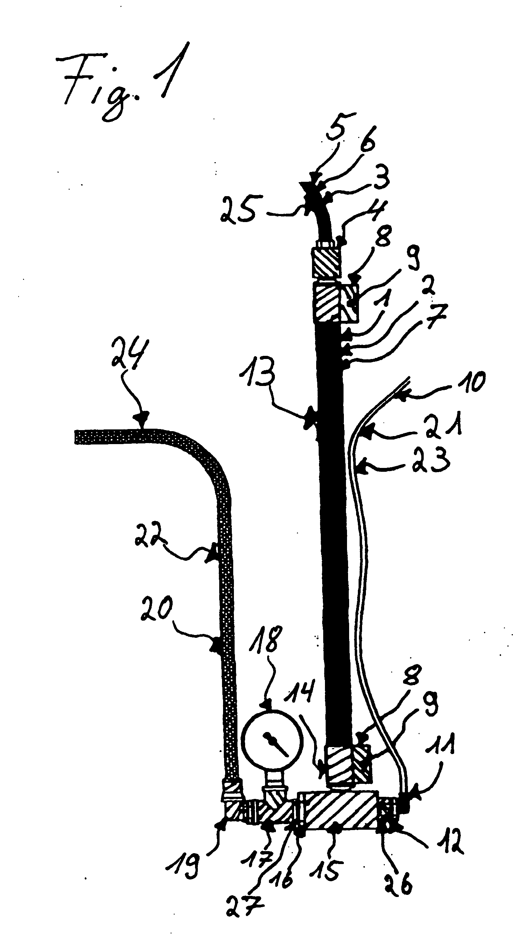

Fig. 1 eine Ansicht eines mit einem Inlinebegaser versehenen Ausschnitts einer Imprägnieranlage,
Fig. 2 eine stilisierte Darstellung eines Kreislaufkarbonators mit einem außerhalb eines Gehäuses angeordneten Inlinebegaser,
Fig. 3 eine stilisierte Darstellung eines Kreislaufkarbonators mit zwei einander parallel geschalteten Inlinebegasern außerhalb des Gehäuses,
Fig. 4 eine stilisierte Darstellung eines Stoßkarbonators mit einem außerhalb des Gehäuses angeordneten Inlinebegaser,
Fig. 5 eine stilisierte Darstellung eines Stoßkarbonators mit zwei einander parallel geschalteten Inlinebegasern außerhalb des Gehäuses,
Fig. 6 eine stilisierte Darstellung eines Stoßkarbonators mit einem innerhalb des Gehäuses angeordneten Inlinebegaser,
Fig. 7 eine stilisierte Darstellung eines Stoßkarbonators mit zwei einander parallel geschalteten Inlinebegasern innerhalb des Gehäuses,
Fig. 8 eine stilisierte Darstellung eines Stoßkarbonators mit zwei innerhalb des Gehäuses angeordneten parallel geschalteten Inlinebegasern, von denen jeder eine vom anderen getrennte Zuleitung aufweist,
Fig. 9 eine stilisierte Darstellung eines Kreislaufkarbonators mit einem innerhalb des Gehäuses angeordneten Inlinebegaser,
Fig. 10 eine stilisierte Darstellung eines Kreislaufkarbonators mit zwei einander parallel geschalteten Inlinebegasern innerhalb des Gehäuses und
Fig. 11 einen Längsschnitt durch einen Inlinebegaser.

Eine Vorrichtung zum Begasen von Flüssigkeiten besteht im Wesentlichen aus einem Begasungsgefäß, das bei einer Begasung mit CO₂ als Karbonatorgefäß (48) bezeichnet wird, einem Inlinebegaser, der bei Begasung mit CO₂ als Inlinekarbonator (26) bezeichnet wird, sowie einer Druckerhöhungspumpe (39), einer Gasversorgung (44), Zapfstellen (32), einem Gehäuse (50) sowie einer ersten Kühlung (45) und einer zweiten Kühlung (49).

Die erste Kühlung (45) ist über eine Verbindungsleitung (46) mit einem oberen Abschlußdeckel (70) des Karbonatorgefäßes (48) verbunden, durch den ein Zugang zu einen Innenraum des Karbonatorgefäßes (48) hindurchragt. In diesem Innenraum findet eine Mischung des durch die Verbindungsleitung (46) in das Karbonatorgefäß(48) eingespeisten kalten Wassers mit einem Gas statt, das aus der Gasversorgung (44) über eine Gasversorgungsleitung (52)und den oberen Abschlußdeckel (70) in den Innenraum des Karbonatorgefäßes (48) eingespeist wird.

Die erste Kühlung (45) ist an ihrem der Verbindungsleitung (46) abgewandten oberen Ende (71) mit einer Einspeisungsleitung (40) verbunden, durch die eine Flüssigkeit aus einem Hauptversorgungsanschluß (42) über einen Regler (41) in die erste Kühlung (45) eingespeist wird. In der Einspeisungsleitung (40) liegt die Druckerhöhungspumpe (39), die für einen konstanten Druck in dem sich an die erste Kühlung (45) anschließenden Flüssigkeitskreislauf sorgt.

Das Karbonatorgefäß (48) ist an seinem dem oberen Abschlußdeckel (70) abgewandten unteren Ende (72) mit einer Entnahmeleitung (47) verbunden, durch die das Gas-Flüssigkeitsge-misch, das im Karbonatorgefäß (48 hergestellt wird, in Richtung auf den Inlinekarbonator (26) abgeleitet wird. Bei einem Kreislaufkarbonator (73) mündet die Entnahmeleitung (47) in eine Steigleitung (35), von der das Gas-Flüssigkeitsgemisch unmittelbar in eine Kreislaufleitung (34) eingespeist wird. In dieser Kreislaufleitung (34) liegt über Anschlüsse (37) mit dieser verbunden eine Verdrängerpumpe (53), die für ein Umpumpen des Gas-Wassergemisches in der Kreislaufleitung (34) sorgt. Die Verdrängerpumpe (53) ist auf ihrer Hochdruckseite mit einer Speiseleitung (36) verbunden, die über eine Kühlleitung (54) mit einem oberen Ende (74) der zweiten Kühlung (49) verbunden ist. Durch dieses obere Ende (74) tritt das Gasflüssigkeits-Gemisch in die zweite Kühlung (49) ein, die es an deren unteren Ende (75) über eine Austrittsleitung (51) in Richtung auf ein unteres Zulaufende (76) des Inlinekarbonators (26) verläßt.

In dem Inlinekarbonator findet eine intensive Durchmischung des Gas-Flüssigkeitsgemisches statt. Nach dieser intensiven Druchmischung verläßt die im Inlinekarbonator (26) karbonisierte Flüssigkeit diesen an dessen oberen Auslaßende über eine Entnahmeleitung (27) in Richtung auf einen Umkehrbogen (28), der über eine Zirkulationsleitung (33) mit der Kreislaufleitung (34) verbunden ist, durch die karbonisierte Flüssigkeit wieder der Verdrängerpumpe (53) zugeleitet wird. Der Umkehrbogen (28) besitzt an seiner höchsten Stelle (78) eine Entnahmestelle (79), durch die im Inlinekarbonator (26) karbonisierte Flüssigkeit entnommen wird. Diese Entnahmestelle (79) ist über eine Ausgangsleitung (29) mit den Zapfstellen (32) verbunden. Diese Zapftstellen (32) können dazu dienen, die im Inlinekarbonator (26) karbonisierte Flüssigkeit zu zapfen. Darüber hinaus können diese Zapfstellen auch als Post-Mix-Hähne ausgebildet sein, so dass beim Zapfen der karbonisierten Flüssigkeit gleichzeitig Sirup in ein an den Zapfstellen (32) befülltes Trinkgefäß eingegeben wird. Jede der Zapfstellen (32) ist über eine Zapfleitung (31) mit einem Verteiler (30) verbunden, der dafür sorgt, dass jede der Zapfstellen (32) mit karbonisierter Flüssigkeit versorgt wird.

Zum Karbonisieren von Flüssigkeiten kann statt eines Kreislaufkarbonators (73) auch ein Stoßkarbonator (80) verwendet werden. Dieser besitzt ähnlich wie der Kreislaufkarbonator (73) eine Karbonatorgefäß (48), das über eine Gasversorgungsleitung (52) mit einer Gasversorgung (44) und über eine Verbindungsleitung (46) mit der ersten Kühlung (45) verbunden ist. Das aus dem Karbonatorgefäß (48) austretende Gas-Flüssigkeitsgemisch wird über eine Entnahmeleitung (47) unmittelbar in die zweite Kühlung (49) eingeleitet, ohne dass dieses Gas-Flüssigkeitsgemisch zunächst in eine Kreislaufleitung (34) eintritt. Auch bei diesem Stoßkarbonator (80) sind die erste und zweite Kühlung sowie das Karbonatsorgefäß (48) in einem Gehäuse (50) angeordnet. Aus diesem tritt die Austrittsleitung (51) unmittelbar in den Inlinekarbonator (26) ein. Dieser besitzt zwei Anschlußmöglichkeiten (58), von denen die eine mit der Austrittsleitung (51) und die andere mit der Ausgangsleitung (29) verbunden ist, die in den Verteiler (30) der Zapfstellen (32) einmündet.

Ähnlich wie beim Kreislaufkarbonator (73) erfolgt die Flüssigkeitsversorgung über einen Hauptversorgungsanschluß (42) und einen Regler (41). Eine Druckerhöhungspumpe (39) sorgt vor dem Eintritt der Flüssigkeit in die erste Kühlung (45) für einen konstanten Flüssigkeitsdruck.

Ebenso steht auch beim Stoßkarbonator (80) eine Gasversorgung (44) zur Verfügung, die über einen Gasdruckregler (43) das Karbonatorgefäß (48) mit einem konstanten Gasdruck über die Gasversorgungsleitung (52) versorgt. Für einen erhöhten Flüssigkeitsdruck wird eine Druckerhöhungspumpe benötigt.

Sowohl beim Kreislaufkarbonator (73) als auch beim Stoßkarbonator (80) kann innerhalb des Gehäuses (50) ein Becken (56) zur Aufnahme eines nicht dargestellten Wasserbetts vorgesehen sein. In diesem Wasserbett sind sowohl die erste und die zweite Kühlung (45, 49) als auch das Karbonatorgefäß (48) angeordnet. Das Wasserbett sorgt für eine konstante Kühlungstemperatur innerhalb des Beckens (56). Zu diesem Zwecke ist innerhalb des Beckens (56) ein Rührer (81) vorgesehen, der von einem Rührermotor (57) angetrieben wird. Der Rührer (81) erzeugt innerhalb des Beckens (56) einen Wasserumlauf, so dass sich innerhalb des gesamten Beckens (56) eine weitgehend gleichbleibende Temperatur einstellt.

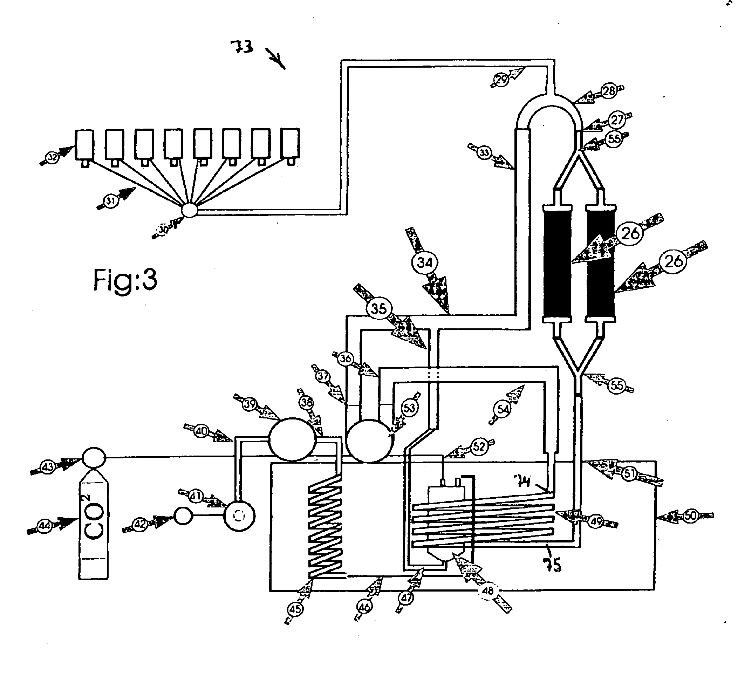

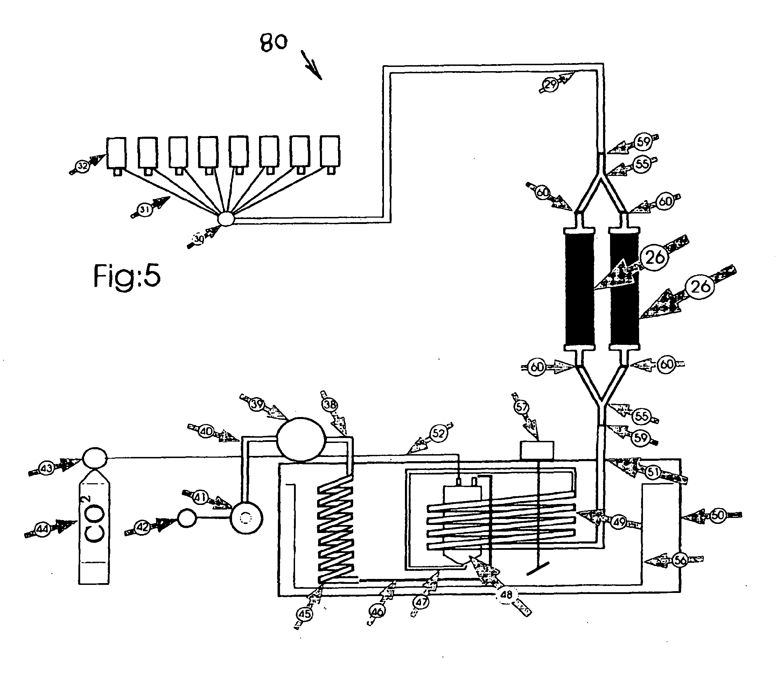

Sowohl beim Kreislaufkarbonator (73) als auch beim Stoßkarbonator (80) können statt eines Inlinekarbonators (26) mehrerer Inlinekarbonatoren (26) einander parallel geschaltet sein (Fig. 3 und 5). Jeder von zwei einander parallel geschalteten Inlinekarbonatoren (26) ist jeder für sich über eine Verzweigung (55) sowohl mit der Austrittsleitung (51) der zweiten Kühlung als auch mit der Entnahmeleitung (27) beim Kreislaufkarbonator (73) bzw. mit der Ausgangsleitung (29) beim Stoßkarbonator (80) verbunden. Entsprechend sind die Verzweigungen (55) über Verbindungen (59) mit den benachbarten Leitungen (51) bzw. (29) verbunden. Jeder Arm einer jeden Verzweigung (55) ist über einen Anschluß (60) mit den Inlinekarbonatoren (26) verbunden.

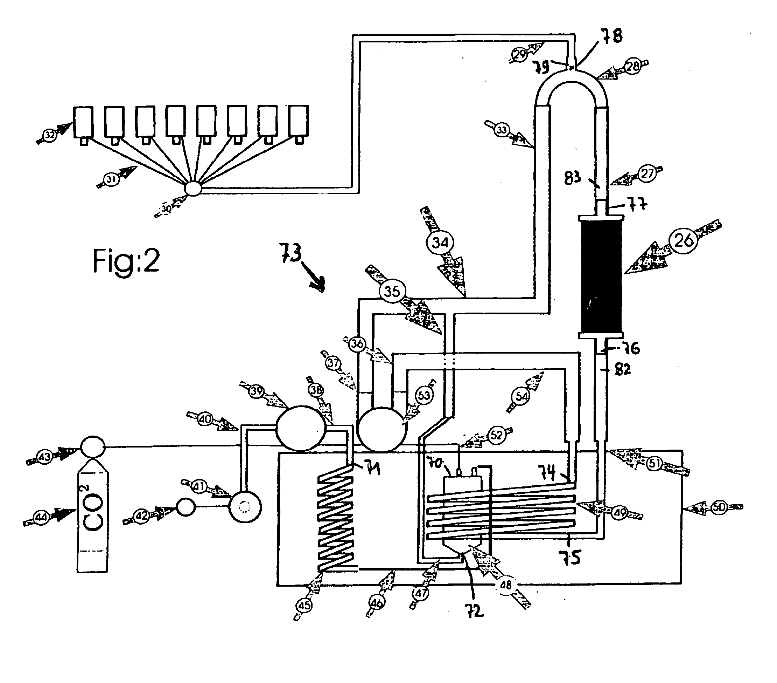

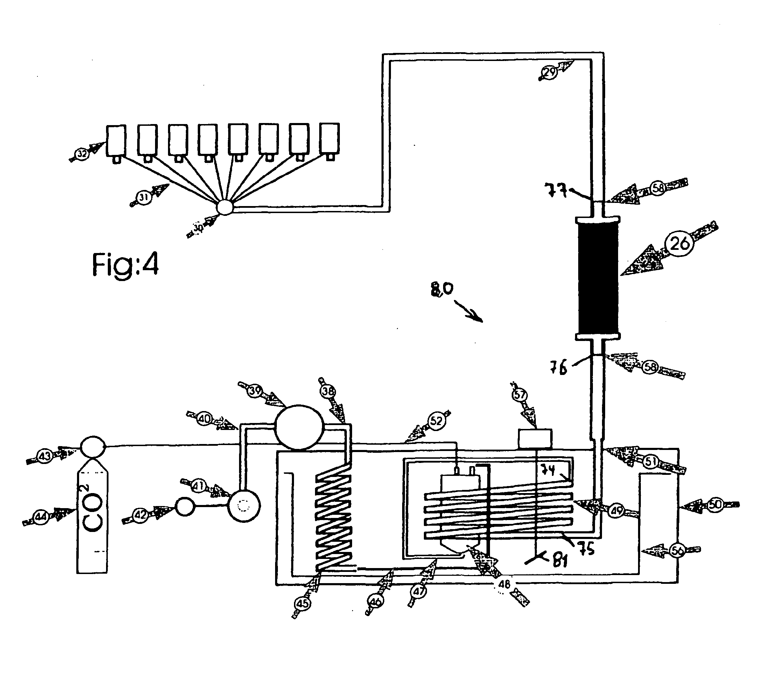

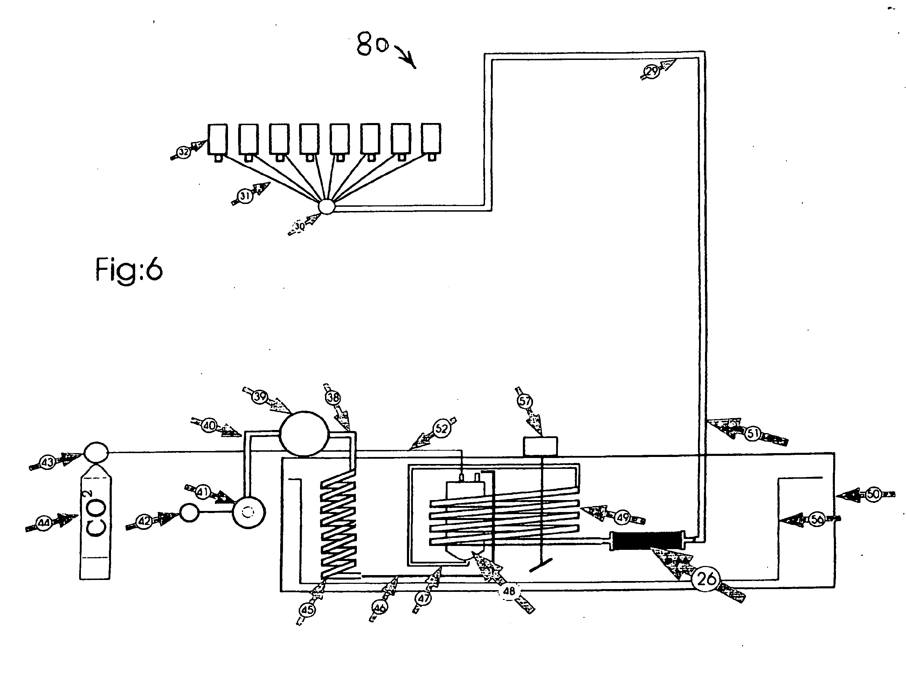

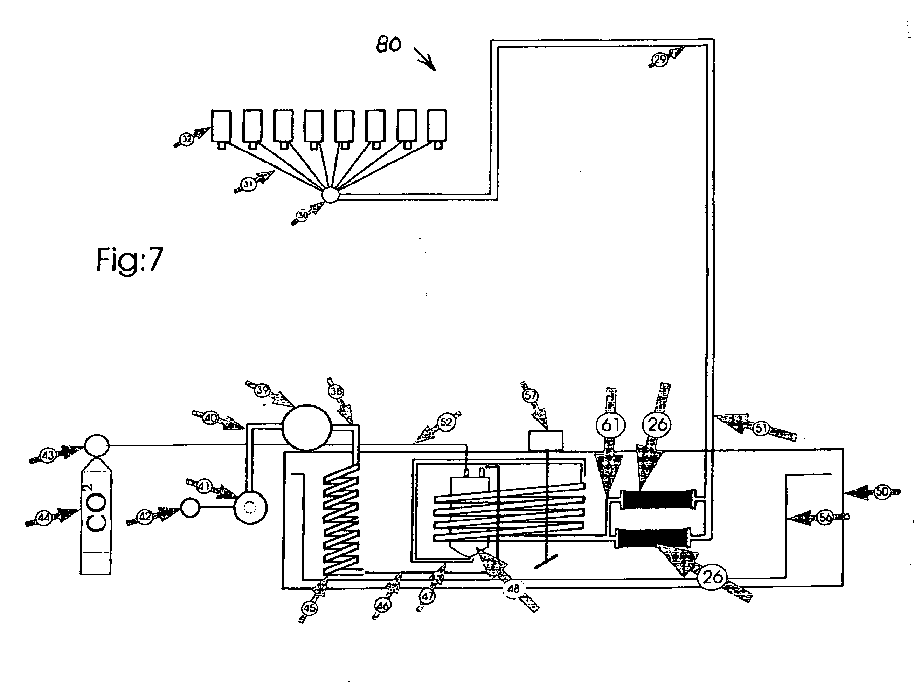

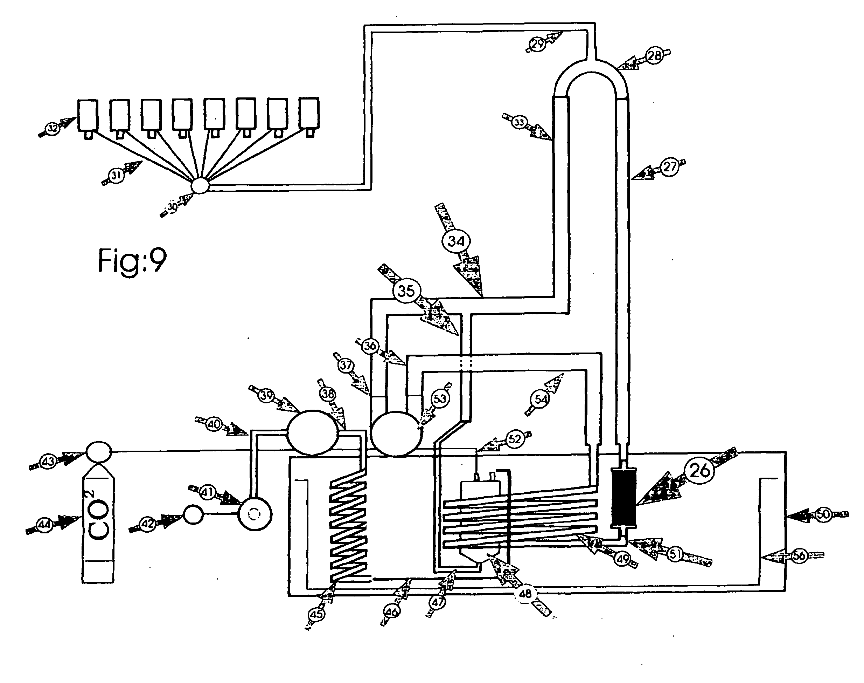

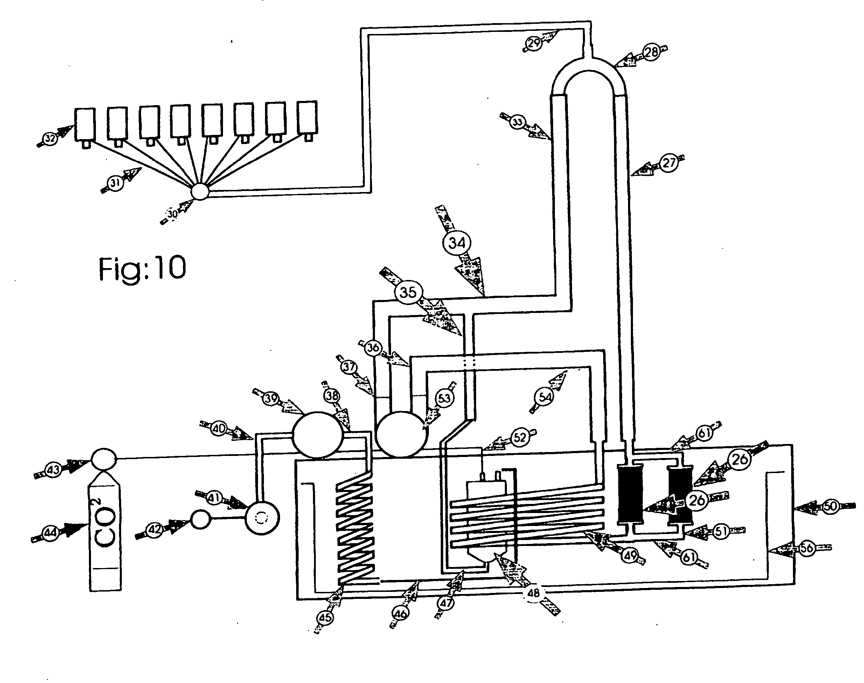

In den Fig. 2, 3, 4, 5 sind die Inlinekarbonatoren (26) außerhalb des Gehäuses (50) mit den benachbarten Leitungen (51, 28, 29) verbunden. Diese Anordnung hat sich insbesondere bewährt, wenn Karbonatorsysteme, die zunächst nur mit einem Karbonatorgefäß (48) versehen waren, mit einem oder mehreren Inlinekarbonatoren (26) nachgerüstet werden sollten, um die Qualität des erzeugten Getränks, beispielsweise eines Softdrinks zu verbessern. Demgegenüber sind in den Fig. 6, 7, 8, 9, 10 Karbonatorsysteme dargestellt, die bereits bei ihrer Herstellung zur Verbesserung der zu erzeugenden Getränkequalität mit Inlinekarbonatoren (26) ausgestattet werden. Bei diesen Karbonatorsystemen werden die Inlinekarbonatoren (26) in das innerhalb des Gehäuses angeordnete Rohrsystem eingefügt, und zwar sowohl bei den Stoßkarbonatoren der Fig. 6, 7, 8 als auch bei den Kreislaufkarbonatoren der Fig. 9 und 10. Dabei sind sowohl bei dem Stoßkarbonator (80) als auch bei dem Kreislaufkarbonator (73) jeweils Konstruktionen denkbar, bei denen einer oder mehrere Inlinekarbonatoren (26) innerhalb des Gehäuses (50) bzw. der Wanne (56) angeordnet werden. Insbesondere bei Verwendung der Wanne (56) ist bei diesen Kostruktionen dafür gesorgt, dass auch innerhalb der Inlinekarbonatoren (26) das durch diese hindurchtretende Gas-.Flüssigkeitsgemisch auf der Temperatur gehalten wird, die innerhalb des im Becken (56) stehenden Wasserbades herrscht.

Bei mehreren Inlinekarbonatoren (26) werden diese zweckmäßigerweise einander parallel geschaltet, und zwar durch eine Verzweigung der aus der zweiten Kühlung (49) austretenden Austrittsleitung (51). In diesem Falle werden die einander parallel geschalteten Inlinekarbonatoren (26) durch Verbindungsleitungen (61) beim Eintritt des Gas-Flüssigkeitsge-misches als auch am Austritt der im Inlinekarbonator (26) karbonisierten Flüssigkeit miteinander verbunden.

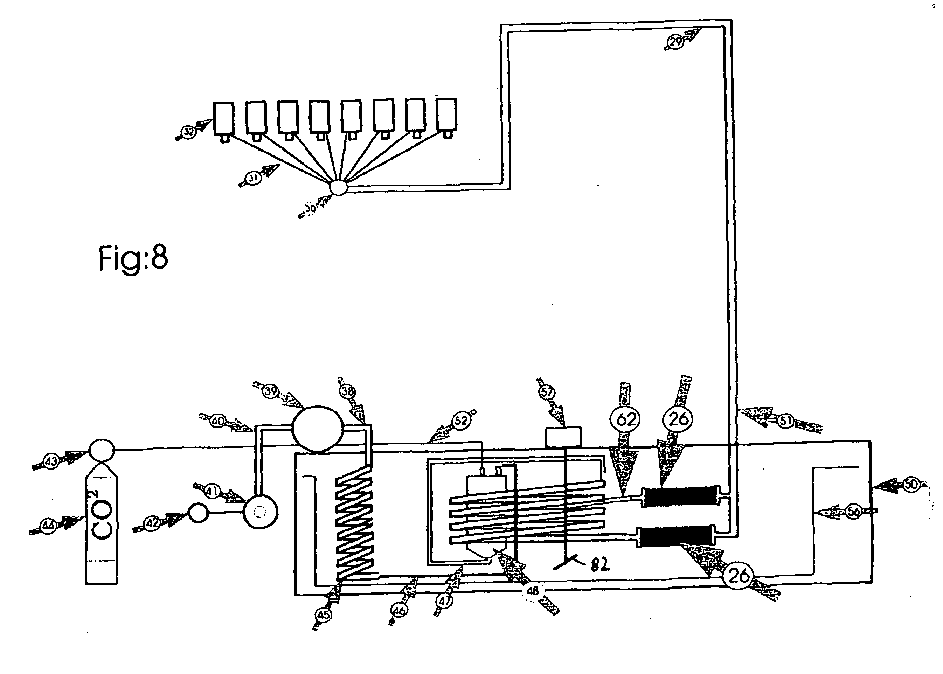

Es ist jedoch auch denkbar, jeden von mehreren Inlinekarbonatoren (26) über eine gesonderte Kühlleitung (62) mit der zweiten Kühlung (49) zu verbinden (Fig. 8).

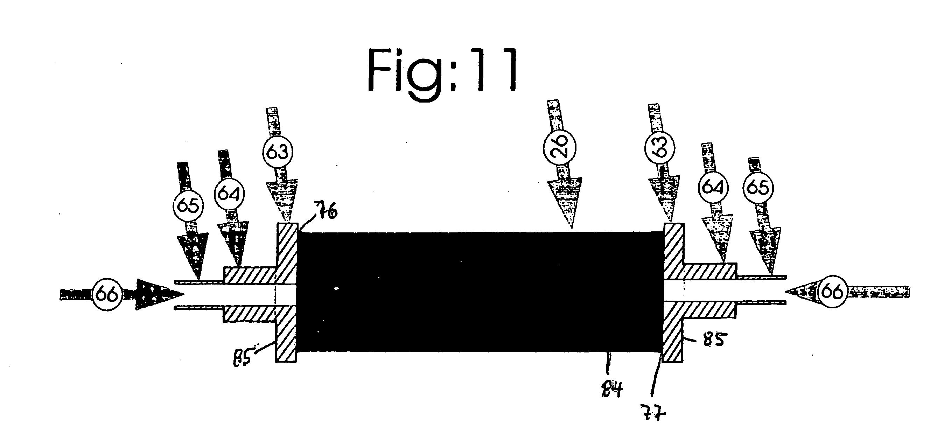

Insbesondere für den nachträglichen Einbau der Inlinekarbonator (26) eignet sich in besonderer Weise die in Fig. 11 gezeigte Konstruktion. Diese beruht auf der Tatsache, dass beim nachträglichen Einbau der Inlinekarbonatoren (26) zweckmäßigerweise eine Einbaumöglichkeit im Bereich einer das Gehäuse (50) verlassenden Schlauchleitung benutzt wird. Diese Schlauchleitung kann zwecks Einbau des Inlinekarbonators (26) durch einen Schnitt unterbrochen werden. Sodann wird aus dieser Schlauchleitung ein Stück herausgetrennt, das in etwa einer Baulänge des einzubauenden Inlinekarbonators (26) entspricht. Sodann wird der Inlinekarbonator jeweils an einem Ende mit einem Schlauchende (82) der ankommenden Austrittsleitung (51) bzw. mit einem Schlauchende (83) der Entnahmeleitung (27) bzw. der Ausgangsleitung (29) verbunden. Diese Schlauchenden (82, 83) besitzen gleiche Querschnitte und gleiche lichte Weiten. Je nach der Konstruktion des jeweiligen Karabonatorsystems kommen zwei unterschiedliche Schlauchabmaße für den Anschluß an den Inlinekarbonator (26) in Betracht. Dabei besitzt der eine Schlauch eine größere und der andere eine kleinere lichte Weite.

Um dem Inlinekarbonator (26) eine möglichst vielfältige Anwendungsmöglichkeit zu erschließen, ist der den Inlinekarbonator (26) umschließende Hohlkörper zweckmäßigerweise als ein Rohr ausgebildet, in dem das vom Gas-Wassergemisch durchflossene Granulat angeordnet ist. Dieses Rohr (84) ist an seinen beiden Enden (76, 77) jeweils mit einem Flansch (63) verschlossen. Dieser Flansch (63) trägt auf seiner dem Rohr (84) abgewandten Seite (85) Aufschubflächen (64, 65), die von einer gemeinsamen Bohrung (66) durchzogen sind. Durch diese Bohrung (66) tritt einerseits das zu karbonisierende Gas-flüssigkeits-Gemisch in das mit Granulat gefüllte Rohr (84) ein und verläßt andererseits dieses Rohr (84) in Richtung auf die benachbarte Entnahmeleitung (27) bzw. die Ausgangsleitung (29). Je nach der lichten Weite des jeweils mit dem Inlinekarbonator (26) zu verbindenden Schlauchendes (82, 83) wird dieses über die Aufschubfläche, (64) bei einer großen lichten Weite bzw. (65) bei einer kleinen lichten Weite aufgeschoben und beispielsweise mit einer nicht dargestellten Schlauchklemme auf der jeweiligen Aufschubfläche (64) bei einer großen lichten Weite bzw. (65) bei einer kleinen lichten Weite befestigt.

Dabei spielt die Durchströmungsrichtung des Inlinekarbonators (26) keine Rolle. Unabhängig davon, ob die zu karbonisierende Flüssigkeit durch die dem Zulauf (76) benachbarte Bohrung (66) oder durch die dem Zulauf (77) benachbarte Bohrung in das Rohr (84) des Inlinekarbonators (26) eintritt, findet in diesem immer eine gleich intensive Mischung des Gas-FlüssigkeitsGemisches statt. Auf diese Weise werden Fehler beim Einbau des Inlinekarbonators (26) vermieden.

### Bezugszeichenliste

Akte: SPA 23 EU

### Hohlkörper-Inline-Imprägniersystem:

- Leitung (Anschluss): 20
- Leitung (Anschluss): 21
- Leitung: 22
- Leitung: 23
- Leitung: 24
- Leitung: 25
- 2. Begaser: 26

- Entnahmeleitung: 27
- Umkehrbogen: 28
- Ausgabeleitung: 29

- Verteiler: 30
- Zapfleitung: 31
- Zapfstelle: 32
- Zirkulationsleitung: 33
- Ringleisung: 34
- Steigleitung: 35
- Speiseleitung: 36
- Anschlüsse: 37

- Druckerhöhungspumpe: 39
- Einspeiseleitung: 40
- Regler: 41
- Hauptversorgungsanschluss: 42
- Gasdruckregler: 43
- Gasversorgung: 44
- Erste Kühlung: 45
- Verbindungsleitung: 46

- Entnahmeleitung: 47
- 1. Begaser: 48
- Zweite Kühlung: 49
- Gehäuse: 50
- Austrittsleitung: 51
- Gasversorgungsleitung: 52
- Verdrängerpumpe: 53
- Kühlleitung: 54
- Verzweigung: 55
- Becken, Wanne: 56

- Rührmotor: 57
- Anschlussmöglichkeit: 58
- Verbindung: 59
- Anschluss: 60
- Verbindungsleitung: 61
- Gesonderte Kühlleitung: 62
- Flansch: 63
- Aufschublächen: 64,65
- Bohrung: 66
- Oberer Abschlussdeckel: 70
- Oberes Ende: 71
- Unteres Ende: 72
- Kreislaufkarbonator: 73
- Oberes Ende: 74
- Unteres Ende: 75
- Unteres Zulaufende: 76
- Oberes Zulaufende: 77
- Höchste Stelle (28): 78
- Entnahmestelle: 79
- Stoßkarbonator: 80
- Rührer: 81
- Schlauchende: 82
- Schlauchende: 83
- Rohr: 84
- Rohr abgewandte Seite: 85

## Patentansprüche

1. Verfahren zur Herstellung von begaster Flüssigkeit, bei dem in einem ersten Begaser (48) ein Gemisch von Flüssigkeit und Gas erzeugt wird, und in dem Gemisch die Bindung des Gases an die Flüssigkeit in einem dem ersten Begaser (48) nachgeschalteten zweiten Begaser (26) intensiviert wird, **dadurch gekennzeichnet, dass** das Gemisch unter Druck in eine aus einem mit großer Oberfläche versehenen Schüttgut bestehende Füllung des zweiten Begasers (26) hindurchgepresst und dabei intensiv durchmischt und nach Verlassen des zweiten Begasers (26) mindestens einer Zapfstelle (32) zugeleitet wird.

2. Verfahren nach Anspruch 1 , **dadurch gekennzeichnet, dass** das Gemisch von Flüssigkeit und Gas in einem Karbonatorgefäss (48) erzeugt wird.

3. Verfahren nach Anspruch 1 oder 2, **dadurch gekennzeichnet, dass** das im Karbonatorgefäss (48) erzeugte Gemisch aus Gas und Flüssigkeit inline durch einen Inlinekarbonator (26) hindurchgeleitet wird, der mit einem Granulat gefüllt ist.

4. Verfahren nach einem der Ansprüche 1 bis 3, **dadurch gekennzeichnet, dass** in das den ersten Begaser verlassende Gas-Flüssigkeitgemisch vor Eintritt in den zweiten Begaser (26) eine zusätzliche Gasmenge eingeleiet wird.

5. Verfahren nach einem der Ansprüche 1 bis 4, **dadurch gekennzeichnet, dass** im zweiten Begaser (26) ein zum Zapfen eines feinperligen Gas-Flüssigkeitgemisches geeigneter Druck eingestellt wird

6. Verfahren nach einem der Ansprüche 1 bis 5, **dadurch gekennzeichnet, dass** das Gas-Flüssigkeitgemisch vor Eintritt in den zweiten Begaser (26) gekühlt wird.

7. Verfahren nach einem der Ansprüche 1 bis 6, **dadurch gekennzeichnet, dass** im ersten und im zweiten Begaser 48, 26) Erfrischungsgetränke zur industriellen Abfüllung begast werden.

8. Verfahren nach einem der Ansprüche 1 bis /, **dadurch gekennzeichnet, dass** der weite Begaser (26) in eine Kühlmaschine integriert wird.

9. Verfahren nach einem der Ansprüche 1 bis 8, **dadurch gekennzeichnet, dass** in den ersten Begaser (48) eine Flüssigkeit zur Begasung eingeleitet wirt.

10. Verfahren nach einem der Ansprüche 1 bis 9, **dadurch gekennzeichnet, dass** in den zweiten Begaser (26) zusätzlich Flüssigkeit eingespeist wird.

11. Verfahren nach einem der Ansprüche 1 bis 10, **dadurch gekennzeichnet, dass** in den zweiten Begasser (26) Flüssigkeit und Gas in einer gegenseitigen Abhangigkeit ihres jeweiligen Druckes eingespeist werden.

12. Verfahren nach einem der Ansprüche 1 bis 11, **dadurch gekennzeichnet, dass** eine mit einem ersten Begaser (48) ausgerüstete Anlage zur Herstellung eines Gas-Flüssigkeitsgemisches nachträglich mit einem als Inlinebegaser ausgebildeten zweiten Begaser (26) verschen wird.

13. Verfahren nach einem der Ansprüche 1 bis 12, **dadurch gekennzeichnet, dass** das Gas-Flüsskeitgemisch im zweiten Begaser (26) bei einem Absenken des Druckes durch zapfen von begaster Flüssigkeit intensiviert wird.

14. Verfahren nach einem der Ansprüche 1 bis 13, **dadurch gekennzeichnet, dass** durch Einschaltung eines zweiten Begasers (26) eine Schaumbildung beim Zapfen von Softdrinks unterdrückt wird.

15. Verfahren nach einem der Ansprüche 1 bis 14, **dadurch gekennzeichnet, dass** vor Einleitung der Begasung im ersten Begaser (48) der Druck in der in den ersten Begaser (48) eintretenden Flüssigkeit durch eine Druckerhöhungspumpe (39) konstant gehalten wird.

16. Verfahren nach einem der Ansprüche 1 bis 15, **dadurch gekennzeichnet, dass** der erste Begaser (48) in einen Kreislaufkarbonator (73) einer Postmixanlage integriert wird.

17. Verfahren nach einem der Ansprüche 1 bis 16, **dadurch gekennzeichnet, dass** in einem Kreislaufkarbonator (73) zwei zweite Begaser (26) in einer Kreislaufleitung (34) parallel geschaltet werden.

18. Verfahren nach einem der Ansprüche 1 bis 15, **dadurch gekennzeichnet, dass** Erfrischungsgetränke in einer Postmixanlage über einen in einer Austrittsleitung (b1) eines Stoßkarbonators (80) liegenden zweiten Begaser (26). geleitet werden.

19. Verfahren nach einem der Ansprüche 1 bis 18, **dadurch gekennzeichnet, dass** zwei zweite Begaser (26) in einer Austrittsleitung (51) eines Stoßkarbonators (80) einender parallel geschaltet werden.

20. Verfahren nach einem der Ansprüche 18 oder 19, **dadurch gekennzeichnet, dass** der zweite Begaser (26) bei einem Stoßkarbonator (80) innerhalb eines den ersten Begaser (48) aufnehmenden Wasserbeckens (56) unmittelbar im Anschluss an das von bcgastcr Flüssigkeit durchflosseite Kühlsystem (49) von dem unter dem Druck des ersten Begasers (48) stehenden Gas-Flüssigkeitgemisch durchflossen wird.

21. Verfahren nach Anspruche 20, **dadurch gekennzeichnet, dass** im Wasserbecken (56) zwei einander parallel geschaltete zweite Begaser (26) von dem unter dem Druck des ersten Begasers (48) stehenden Gas-Flüssigkeitgemisch durchflossen werden.

22. Verfahren nach Anspruche 21, **dadurch gekennzeichnet, dass** jedem von mindestens zwei vom Gas-Flüssigkeitgemisch des ersten Begasers (48) durchflossenen zweiten Begasern (26) das Gas-Flüssigkeitgemisch des ersten Begasers (48) über eine gesonderte Zuleitung zugeleitet wird.

23. Verfahren nach einem der Ansprüche 21 oder 22, **dadurch gekennzeichnet, dass** bei einem Kreislaufkarbone tor (71) der dem ersten Begaser (48) nachgeschaltete zweite Begaser (26) innerhalb des Wasserbeckens (56) in die Kreislaufleitung (34) integriert wird.

24. Verfahren nach Anspruch 23, **dadurch gekennzeichnet, dass** bei einem Kreislaufkarbonator (73) zwei einander parallel geschaltete Begaser (26) innerhalb des Wasserbeckens (56) von dem unter dem Druck des ersten Begasers (48) stchenden Gas-Flüssigkeitgemisch durchflossen werden.

25. Vorrichtung zur Herstellung von begaser Flüssigkeit mit mindestens einem ersten Begaser (48), in dessen Gefäss ein Gemisch aus Flüssigkeit und Gas hergestellt wird, und einem dem ersten Begaser (48) nachgeschalteten zweiten Begaser (26), **dadurch gekennzeichnet, dass** der zweite Karbonator (26) eine Füllung aus einem Granulat großer Oberfläche aufweist, die von dem aus dem Gefäss des ersten Begasers (48) austretenden Gemisch aus Flüssigkeit und Gas unter Druck durchströmt ist, und der zweite Begaser (26) an seinem Ausgang mit einer Zaptstelle (32) für die begaste Flüssigkeit über eine Ausgabeleitung (29) verbunden ist.

26. Vorrichtung nach Anspruch 25, **dadurch gekennzeichnet, dass** bei einer Begasung der Flüssigkeit- mit CO₂ der erste Begaser (48) als eine Karbonatorgefäß und der zweite Begaser (26) als Inlinekarbonator ausgebildet, sind.

27. Vorrichtung nach Anspruch 26**, dadurch gekennzeichnet, dass** der Inlinekarbonator mit einem Granulat gefüllt ist.

28. nach einem der Ansprüche 25 bis 27, **dadurch gekennzeichnet, dass** das Karbonatorgefäß innerhalb eines Kreislaufkarbonators (73) angeordnet ist.

29. Vorrichtung nach einem der Ansprüche 25 bis 27, **dadurch gekennzeichnet, dass** das Karbonatorgefäß innerhalb eines Stoßkeirbonators (80) angeordnet ist.

30. Vorrichtung nach einem der Ansprüche 25 bis 29, **dadurch gekennzeichnet, dass** der Inlinekarbonator außerhalb eines sowohl des Karbonatorgefäß als auch eine Kühlung dazu aufnehmenden Gehäuses (50) angeordnet ist.

31. Vorrichtung nach einem der Ansprüche 25 bis 29, **dadurch gekennzeichnet, dass** der Inlinekarbonator innerhalb eines sowohl das Karbonatorgefäß als auch eine Kühlung (49) aufnehmenden Gehäuses (50) angeordnet ist.

32. Vorrichtung nach einem der Ansprüche 25 bi s 31, **dadurch gekennzeichnet, dass** zwischen dem Karbonatorgefäß und dem Imlinekarbonator eine Kühlung (49) vorgesehen ist, die von dem unter dem Druck des Kabonatorgefäßes stehenden Gas-Flüssigkeitgemisch durchflossen ist.

33. Vorrichtung nach dar einem der Anspruche 25 bis 32, **dadurch gekennzeichnet, dass** der Inlinekarbonator bei einem Kreislautkarbonator (73) in einem Zweig einer Kreislaufleitung (34) angeordnet ist, der unter einem von einer Verdrängerpumpe (b3) erzeugten gegenüber der übrige Kreislaufleitung (34) er höhten Druck steht.

34. Vorrichtung nach einem der Ansprüche 29 bis 32, **dadurch gekennzeichnet, dass** bei einem Stoßkarbonator (80) der Inlinekarbonator im einer mit Zapfstellen (32) verbundenen Ausgabeleitung (29) vorgesehen ist.

35. Vorrichtung nach einem der Ansprüche 25 bis 34, **dadurch gekennzeichnet, dass** der Inlinekarbonator (26) aus einem mit Granulat gefüllten Hohlkörper besteht, dessen einander gegenüberliegenden Enden (76, 77) jeweils mit einem Flansch (73) verschlucken sind, durch den eine sich jeweils in Richtung auf einen vom Hohlkörper umschlossenen Innenraum erstreckende Bohrung (66) verläuft, die jeweils auf ihrer dem Innenraum abgewandten Seite von rohrformigen Aufschubflächen (64, 65) umgeben sind, von denen jeweils die dem Flansch (66) zugewandte innere Aufschubfläche (64) einen gröβeren Querschnitt aufweist als die dem Flansch (63) abgewandte äußere Aufschubfläche (65).

36. Vorrichtung nach einem der Ansprüche 29 bis 35, **dadurch gekennzeichnet, dass** der Inlinekarbonator einen Hohlkörper aufweist, der aus drei miteinander verbundenen Schichten besteht.

37. Vorrichtung nach Anspruche 36, **dadurch gekennzeichnet, dass** der Hohlkörper des Inlinekarbonators eine innere Schicht aus Kunststoff aufweist, mit der eine mittlere Schicht aus Aluminium verbunden ist, auf der eine äußore Schicht aus Kunststoff befestigt ist.

## Claims

1. A method for producing a gasified fluid, wherein a mixture of fluid and gas is produced in a first gasifier (48), and in the mixture the bonding of the gas to the fluid is intensified in a second gasifier (26) arranged downstream of the first gasifier (48), **characterized in that** the mixture is pressed under pressure into a filling of the second gasifier (26), which filling consists of a bulk material having a large surface area, and is thoroughly mixed in this process and is supplied to at least one tap (32) after leaving the second gasifier (26).

2. A method according to claim 1, **characterized in that** the mixture of fluid and gas is produced in a carbonator vessel (48).

3. A method according to claim 1 or 2, **characterized in that** the mixture of gas and fluid produced in the carbonator vessel (48) is guided inline through an inline carbonator (26) which is filled with a granulate.

4. A method according to one of the claims 1 to 3, **characterized in that** prior to entering the second gasifier (26) an additional gas quantity is introduced into the gas/fluid mixture which leaves the first gasifier.

5. A method according to one of the claims 1 to 4, **characterized in that** a pressure suitable for tapping a gas/fluid mixture with fine bubbles is set in the second gasifier (26).

6. A method according to one of the claims 1 to 5, **characterized in that** the gas/fluid mixture is cooled before entering the second gasifier (26).

7. A method according to one of the claims 1 to 6, **characterized in that** refreshing beverages for industrial filling are gasified in the first and second gasifier (48, 26).

8. A method according to one of the claims 1 to 7, **characterized in that** the second gasifier (26) is integrated in a refrigerator.

9. A method according to one of the claims 1 to 8, **characterized in that** a fluid for gasifying is introduced into the first gasifier (48).

10. A method according to one of the claims 1 to 9, **characterized in that** additional fluid is introduced into the second gasifier (26).

11. A method according to one of the claims 1 to 10, **characterized in that** fluid and gas are supplied into the second gasifier (26) depending mutually on their respective pressure.

12. A method according to one of the claims 1 to 11, **characterized in that** an installation for producing a gas/fluid mixture which is equipped with a first gasifier (48) is retrofitted with a second gasifier (26) arranged as an inline gasifier.

13. A method according to one of the claims 1 to 12, **characterized in that** the fluid/gas mixture is intensified in the second gasifier (26) in case of a reduction of the pressure by tapping gasified fluid.

14. A method according to one of the claims 1 to 13, **characterized in that** the foaming during tapping of soft drinks is suppressed by activating a second gasifier (26).

15. A method according to one of the claims 1 to 14, **characterized in that** prior to initiating the gasifying in the first gasifier (48) the pressure in the fluid entering the first gasifier (48) is kept constant by a pressure-increasing pump (39).

16. A method according to one of the claims 1 to 15, **characterized in that** the first gasifier (48) is integrated in a circuit carbonator (73) of a post-mix installation.

17. A method according to one of the claims 1 to 16, **characterized in that** two second gasifiers (26) are switched in parallel in a circuit line (34) in a circuit carbonator (73).

18. A method according to one of the claims 1 to 15, **characterized in that** refreshing beverages are guided in a post-mix installation via a second gasifier (26) disposed in an output line (51) of a batch carbonator (80).

19. A method according to one of the claims 1 to 18, **characterized in that** two second gasifiers (26) are switched in parallel with respect to each other in an output line (51) of a batch carbonator (80).

20. A method according to one of the claims 18 or 19, **characterized in that** the gas/fluid mixture which is under the pressure of the first gasifier (48) flows through the second gasifier (26) in a batch carbonator (80) within a water basin (56) accommodating the first gasifier (48) directly after the cooling system (49) through which gasified fluid flows.

21. A method according to claim 20, **characterized in that** in the water basin (56) the gas/fluid mixture which is under the pressure of the first gasifier (48) flows through two second gasifiers (26) which are connected in parallel with respect to each other.

22. A method according to claim 21, **characterized in that** the gas/fluid mixture of the first gasifier (48) is supplied via a separate feed line to each one of at least two second gasifiers (26) which is flowed through by the gas/fluid mixture of the first gasifier (48).

23. A method according to one of the claims 21 or 22, **characterized in that** in a circuit carbonator (71) the second gasifier (26) which is provided downstream of the first gasifier (48) is integrated in the circuit line (34) within the water basin (56).

24. A method according to claim 23, **characterized in that** in a circuit carbonator (73) the gas/fluid mixture which is under the pressure of the first gasifier (48) flows through two gasifiers (26) which are switched in parallel with respect to each other within the water basin (56).

25. An apparatus for producing gasified fluid, comprising at least one first gasifier (48), in the vessel of which a mixture of fluid and gas is produced, and a second gasifier (26) arranged downstream of the first gasifier (48), **characterized in that** the second carbonator (26) comprises a filling made of a granulate with a large surface area, with the mixture of fluid and gas exiting from the vessel of the first gasifier (48) flowing through said filling under pressure, and the second gasifier (26) is connected at its output with a tap (32) for the gasified fluid via an output line (29).

26. An apparatus according to claim 25, **characterized in that** when the fluid is gasified with CO₂ the first gasifier (48) is arranged as a carbonator vessel and the second gasifier (26) is arranged as an inline carbonator.

27. An apparatus according to claim 26, **characterized in that** the inline carbonator is filled with a granulate.

28. An apparatus according to one of the claims 25 to 27, **characterized in that** the carbonator vessel is arranged within a circuit carbonator (73).

29. An apparatus according to one of the claims 25 to 27, **characterized in that** the carbonator vessel is arranged within a batch carbonator (80).

30. An apparatus according to one of the claims 25 to 29, **characterized in that** the inline carbonator is arranged outside of a housing (50) accommodating both the carbonator vessel as well as a cooling system for the same.

31. An apparatus according to one of the claims 25 to 29, **characterized in that** the inline carbonator is arranged within a housing (50) accommodating both the carbonator vessel as well as a cooling system (49).

32. An apparatus according to one of the claims 25 to 31, **characterized in that** a cooling system (49) is provided between the carbonator vessel and the inline carbonator, with the gas/fluid mixture which is under the pressure of the carbonator vessel flowing through said cooling system.

33. An apparatus according to one of the claims 25 to 32, **characterized in that** the inline carbonator is arranged in a circuit carbonator (73) in a branch of the circuit line (34) which is under a pressure which is generated by a displacement pump (53) and is increased over the remaining circuit line (34).

34. An apparatus according to one of the claims 29 to 32, **characterized in that** in a batch carbonator (80) the inline carbonator is provided in an output line (29) connected with taps (32).

35. An apparatus according to one of the claims 25 to 34, **characterized in that** the inline carbonator (26) consists of a hollow body filled with granulate, the opposite ends (76, 77) of which are each sealed by a flange (73), through which a bore (66) extends in the direction towards an interior space enclosed by the hollow body, which ends are encompassed on their side facing away from the interior space by tubular slide-on surfaces (64, 65), of which the inner slide-on surface (64) facing the flange (66) has a larger cross section than the outer slide-on surface (65) facing away from the flange (63).

36. An apparatus according to one of the claims 29 to 35, **characterized in that** the inline carbonator comprises a hollow body which consists of three layers which are mutually connected.

37. An apparatus according to claim 36, **characterized in that** the hollow body of the inline carbonator comprises an inner layer made of plastic, with which a middle layer made of aluminium is connected, to which an outer layer made of plastic is fastened.

## Revendications

1. Procédé pour la fabrication de liquide gazéifié, dans lequel un mélange de liquide et de gaz est produit dans un premier gazéificateur (48) et la liaison du gaz au liquide dans le mélange est intensifiée dans un deuxième gazéificateur (26) faisant suite au premier gazéificateur (48), **caractérisé en ce que** le mélange est injecté sous pression dans une garniture du deuxième gazéificateur (26) composée d'une matière en vrac ayant une surface étendue et brassé intensivement puis amené à au moins un point de prélèvement (32) après sa sortie du deuxième gazéificateur (26).

2. Procédé selon la revendication 1, **caractérisé en ce que** le mélange de liquide et de gaz est produit dans une cuve de carbonatation (48).

3. Procédé selon la revendication 1 ou 2, **caractérisé en ce que** le mélange de gaz et de liquide produit dans la cuve de carbonatation (48) est amené en ligne à travers un carbonateur en ligne (26) rempli de granulés.

4. Procédé selon l'une des revendications 1 à 3, **caractérisé en ce qu'**une quantité supplémentaire de gaz est introduite dans le mélange de gaz et de liquide sortant du premier gazéificateur avant l'entrée dans le deuxième gazéificateur (26).

5. Procédé selon l'une des revendications 1 à 4, **caractérisé en ce qu'**une pression convenant pour prélever un mélange de gaz et de liquide finement perlé est établie dans le deuxième gazéificateur (26).

6. Procédé selon l'une des revendications 1 à 5, **caractérisé en ce que** le mélange de gaz et de liquide est refroidi avant son entrée dans le deuxième gazéificateur (26).

7. Procédé selon la revendication 1 à 6, **caractérisé en ce que** des boissons rafraîchissantes destinées à un remplissage industriel sont gazéifiées dans le premier gazéificateur et le deuxième (48, 26).

8. Procédé selon l'une des revendications 1 à 7, **caractérisé en ce que** le deuxième gazéificateur (26) est intégré dans une machine frigorifique.

9. Procédé selon l'une des revendications 1 à 8, **caractérisé en ce qu'**un liquide est acheminé dans le premier gazéificateur (48) pour être gazéifié.

10. Procédé selon l'une des revendications 1 à 9, **caractérisé en ce que** du liquide supplémentaire est amené dans le deuxième gazéificateur (26).

11. Procédé selon l'une des revendications 1 à 10, **caractérisé en ce que** du liquide et du gaz sont introduits dans le deuxième gazéificateur (26) selon une dépendance mutuelle de leur pression respective.

12. Procédé selon l'une des revendications 1 à 11, **caractérisé en ce qu'**une installation équipée d'un premier gazéificateur (48) pour la fabrication d'un mélange de gaz et de liquide est équipée ultérieurement d'un deuxième gazéificateur (26) conçu comme un gazéificateur en ligne.

13. Procédé selon l'une des revendications 1 à 12, **caractérisé en ce que** le mélange de gaz et de liquide est intensifié dans le deuxième gazéificateur (26) lors de la réduction de la pression par le prélèvement de liquide gazéifié.

14. Procédé selon l'une des revendications 1 à 13, **caractérisé en ce que** l'amorçage de la gazéification dans le premier gazéificateur (26) permet d'inhiber la formation de mousse lors du prélèvement de boissons non alcoolisées.

15. Procédé selon l'une des revendications 1 à 14, **caractérisé en ce qu'**avant l'amorçage de la gazéification dans le premier gazéificateur (48), la pression constante est maintenue dans le liquide entrant dans le premier gazéificateur (48) par une pompe de pressurisation (39).

16. Procédé selon l'une des revendications 1 à 15, **caractérisé en ce que** le premier gazéificateur (18) est intégré dans un carbonateur à circuit (73) d'une installation de post-mélange.

17. Procédé selon l'une des revendications 1 à 16, **caractérisé en ce que** deux deuxièmes gazéificateurs (26) sont montés en parallèle dans une conduite de circuit (34) dans un carbonateur à circuit (13).

18. Procédé selon l'une des revendications 1 à 15, **caractérisé en ce que** des boissons rafraîchissantes sont amenées dans une installation de post-mélange en passant par un deuxième gazéificateur (26) situé dans une conduite de sortie (51) d'un carbonateur à coups de pression (80).

19. Procédé selon l'une des revendications 1 à 18, **caractérisé en ce que** deux deuxièmes gazéificateurs (26) sont montés en parallèle dans une conduite de sortie (51) d'un carbonateur à coups de pression (80).

20. Procédé selon l'une des revendications 18 ou 19, **caractérisé en ce que** le deuxième gazéificateur (26) dans un carbonateur à coups de pression (80) est parcouru, à l'intérieur d'un bac d'eau (56) contenant le premier gazéificateur (40), immédiatement après le système frigorifique (49) parcouru par le liquide gazéifié, par le mélange de gaz et de liquide se trouvant à la pression du premier gazéificateur (48).

21. Procédé selon la revendication 20, **caractérisé en ce que** deux deuxièmes gazéificateurs (26) montés en parallèle sont parcourus dans le bac d'eau (56) par le mélange de gaz et de liquide se trouvant à la pression du premier gazéificateur (48).

22. Procédé selon la revendication 21, **caractérisé en ce que** le mélange de gaz et de liquide du premier gazéificateur (48) est amené à chacun d'au moins deux deuxièmes gazéificateurs (26) qu'il parcourt par une conduite d'arrivée séparée.

23. Procédé selon l'une des revendications 21 ou 22, **caractérisé en ce que** dans un carbonateur à circuit (71), le deuxième gazéificateur (26) monté en aval du premier gazéificateur (40) est intégré dans la conduite de circuit (34) à l'intérieur du bac d'eau (56).

24. Procédé selon la revendication 23, **caractérisé en ce que** dans un carbonateur à circuit (73), deux gazéificateurs (26) montés en parallèle sont parcourus par le mélange de gaz et de liquide se trouvant sous la pression du premier gazéificateur (48) à l'intérieur du bac d'eau (56).

25. Dispositif pour la fabrication de liquide gazéifié avec au moins un premier gazéificateur (48) dans la cuve duquel un mélange de liquide et de gaz est fabriqué, et avec un deuxième gazéificateur (26) monté en aval du premier gazéificateur (48), **caractérisé en ce que** le deuxième carbonateur (26) présente une garniture de granulés ayant une grande surface, qui est parcourue par le mélange de gaz et de liquide sortant de la cuve du premier gazéificateur (48), et le deuxième gazéificateur (26) est relié à sa sortie à un point de prélèvement (32) pour le liquide gazéifié par une conduite de sortie (29).

26. Dispositif selon la revendication 25, **caractérisé en ce que** lorsque le liquide est gazéifié avec du CO₂, le premier gazéificateur (48) est réalisé comme une cuve de carbonatation et le deuxième gazéificateur (26) comme un carbonateur en ligne.

27. Dispositif selon la revendication 26, **caractérisé en ce que** le carbonateur en ligne est rempli de granulés.

28. Dispositif selon l'une des revendications 25 à 27, **caractérisé en ce que** la cuve de carbonatation est disposée à l'intérieur d'un carbonateur à circuit (73).

29. Dispositif selon l'une des revendications 25 à 27, **caractérisé en ce que** la cuve de carbonateur est disposée à l'intérieur d'un carbonateur à coups de pression (80).

30. Dispositif selon l'une des revendications 25 à 29, **caractérisé en ce que** le carbonateur en ligne est disposé à l'extérieur d'un boîtier (50) contenant aussi bien la cuve de carbonatation qu'un refroidissement pour celui-ci.

31. Dispositif selon l'une des revendications 25 à 29, **caractérisé en ce que** le carburateur en ligne est disposé à l'intérieur d'un boîtier (50) contenant aussi bien la cuve de carbonatation qu'un refroidissement (49) pour celui-ci.

32. Dispositif selon l'une des revendications 25 à 31, **caractérisé en ce qu'**il est prévu entre la cuve de carbonatation et le carbonateur en ligne un refroidissement (49) qui et parcouru par le mélange de gaz et de liquide se trouvant à la pression de la cuve de carbonatation.

33. Dispositif selon l'une des revendications 25 à 32, **caractérisé en ce que** le carbonateur en ligne est disposé, dans un carbonateur à circuit (73), dans une branche d'une conduite de circuit (34) qui se trouve sous une pression augmentée par rapport au reste de la conduite de circuit (34) créée par une pompe de refoulement (53).

34. Dispositif selon l'une des revendications 29 à 32, **caractérisé en ce que** dans un carbonateur à coups de pression (80), le carbonateur en ligne est muni d'une conduite de sortie (29) reliée à des points de prélèvement (32).

35. Dispositif selon l'une des revendications 25 à 34, **caractérisé en ce que** le carbonateur en ligne (26) se compose d'un corps creux rempli de granulés, dont les extrémités opposées (76, 77) sont fermées chacune par une bride (73) à travers laquelle passe un perçage (66) s'étendant en direction d'un espace intérieur renfermé par le corps creux, qui sont entourés sur leur côté opposé à l'espace intérieur de surfaces de poussée (64, 65) tubulaires, la surface de poussée intérieure (64) dirigée vers la bride (66) ayant une plus grande section que la surface de poussée extérieure (65) orientée à l'opposé de la bride (63).

36. Dispositif selon l'une des revendications 29 à 33, **caractérisé en ce que** le carbonateur en ligne présente un corps creux qui se compose de trois couches reliées entre elles.

37. Dispositif selon la revendication 36, **caractérisé en ce que** le corps creux du carbonateur en ligne présente une couche intérieure en matière plastique, à laquelle est reliée une couche intermédiaire en aluminium sur laquelle une couche extérieure en matière plastique est fixée.
